# EUROPÄISCHE PATENTSCHRIFT

(11) **EP 0 771 841 B1**
(45) Veröffentlichungstag und Bekanntmachung des Hinweises auf die Patenterteilung: **02.06.1999**
(21) Anmeldenummer: 96116621.2
(22) Anmeldetag: 17.10.1996
(51) Int. Cl.: C08K 5/52

(54) **Halogenfreier, flammwidriger Polyurethanhartschaum**
Halogen-free, flame-retardant polyurethane rigid foam
Mousse rigide de polyuréthane ignifuge et sans halogène

(30) Priorität: 03.11.1995 DE 19541037
(43) Veröffentlichungstag der Anmeldung: 07.05.1997
(73) Patentinhaber: Clariant GmbH, 65929 Frankfurt am Main (DE)
(72) Erfinder: Jung, Siegfried, 61184 Karben (DE); Staendeke, Horst, Dr., 53797 Lohmar (DE)

(56) Entgegenhaltungen:
- EP-A- 0 624 611
- EP-A- 0 665 251
- US-A- 4 542 170

## Beschreibung

Die Erfindung betrifft einen halogenfreien, flammwidrigen Polyurethanhartschaum.

Verbote und Verwendungsbeschränkungen für vollhalogenierte Fluorchlorkohlenwasserstoffe (FCKW), beispielsweise für Trichlofluormethan (R 11), als Treibmittel bei der Herstellung von Polyurethan (PUR)-Hartschaum machen es erforderlich, auch brennbare organische Verbindungen als FCKW-Ersatzstoffe einzusetzen.

Die Verwendung von Pentan als Treibmittel ist bereits aus der US-PS 3 072 582 bekannt; weitere Informationen über die Verwendung von Pentan als Treibmittel für PUR-Hartschäume finden sich bei G. Heilig, Pentan - eine FCKW-Alternative für Polyurethan-Hartschaumstoffe, Kunststoffe 81, (1991), Seiten 622 bis 625 und bei M. Mann et al., Hartschaumstoffe mit alternativen Blähmitteln, Plastverarbeiter 43, (1992), 9, Seiten 90 bis 96.

Die Verwendung brennbarer Treibmittel bei der Herstellung von PUR-Hartschäumen führt erwartungsgemäß zu Problemen bei der flammwidrigen Ausrüstung, weshalb die Flammschutzsysteme den veränderten Bedingungen angepaßt werden mußten.

Dabei wurde berücksichtigt, daß durch den Wegfall der halogenhaltigen Treibmittel nun die Chance gegeben war, bei Verwendung halogenfreier Flammschutzmittel PUR-Hartschäume herzustellen, aus denen im Brandfall keine korrosiven Halogenwasserstoffe entstehen können, die häufig Ursache für Sekundärschäden sind, welche die eigentlichen Brandschadenskosten um ein Vielfaches übersteigen.

In der EP-A-0 394 769 wird beschrieben, daß Ammoniumpolyphosphat in Kombination mit Methanphosphonsäuredimethylester (DMMP) als Flammschutzmittel für pentangetriebene PUR-Hartschäume eingesetzt werden kann.

Da der Methanphosphonsäuredimethylester unter toxikologischen Aspekten [Einstufung als Mutagen der Kategorie 2 mit R46-Label: "Kann vererbbare Schäden verursachen"] bestimmten Verwendungsbeschränkungen unterliegt, wurde nach Formulierungen gesucht, die zur Erfüllung der geforderten Brandschutznormen auf die Verwendung von DMMP verzichten können.

Überraschenderweise wurde nun gefunden, daß Formulierungen für PUR-Hartschäume, die von Mischungen aus stickstofffreien und stickstoffhaltigen Polyetherpolyolen (siehe Kunststoff-Handbuch "Polyurethane", S. 58-67, Carl Hanser Verlag München, 1993) ausgehen, mit Ammoniumpolyphosphat halogenfrei flammwidrig eingestellt werden können.

Dies war deshalb überraschend und nicht vorhersehbar, weil PUR-Hartschäume, die entweder nur aus stickstofffreien oder nur aus stickstoffhaltigen Polyetherpolyolen hergestellt wurden, bei Verwendung von Flammschutzmitteln auf Basis Ammoniumpolyphosphat keinen Flammschutzeffekt erkennen lassen. Erst durch die Kombination von stickstofffreien und stickstoffhaltigen Polyetherpolyolen wird eine beträchtliche Wirkungsverstärkung erreicht, die das Erfüllen der Flammschutznormen mit wirtschaftlich vertretbaren Einsatzkonzentrationen gestattet.

Die Erfindung betrifft somit einen halogenfreien, flammwidrigen Polyurethanhartschaum auf Basis von Polyetherpolyolen und Polyisocyanaten, welcher dadurch gekennzeichnet ist, daß er als Polyolkomponente Mischungen von stickstofffreien und stickstoffhaltigen Polyetherpolyolen und als Flammschutzmittel Ammoniumpolyphosphat enthält.

Bevorzugt liegt der Stickstoffgehalt des Polyurethanhartschaums aus der Polyolkomponente zwischen 0,7 und 1,7 Gew.-%.

Der Polyurethanhartschaum gemäß der Erfindung enthält 20 bis 70 Gewichtsteile, vorzugsweise 20 bis 50 Gewichtsteile des Flammschutzmittels je 100 Gewichtsteile Polyetherpolyol.

Die Erfindung betrifft ebenfalls ein Verfahren zur Herstellung eines halogenfreien, flammwidrigen Polyurethanhartschaums auf Basis von Mischungen aus stickstoffhaltigen und stickstofffreien Polyetherpolyolen und Polyisocyanaten, wobei das Flammschutzmittel in Form einer Paste zugesetzt wird. Als Carrier bei der Pastenherstellung können beispielsweise niedrigviskose Phosphorsäuretriester eingesetzt werden.

Bevorzugt wird die Paste mit hochdisperser Kieselsäure, modifizierten Rizinusölderivaten, organisch modifizierten Schichtsilikaten oder deren Mischungen thixotrop eingestellt.

### Beispiele

Den Versuchen zur Herstellung von halogenfreien, flammwidrigen Polyurethan-Hartschäumen lag folgende Rezeptur zugrunde (Gew.-Teile):

| | |
|---|---|
| 100 | Teile Polyetherpolyol |
| 40 | Teile Flammschutzmittel (siehe Tabellen 1 und 2) |
| 1,0 - 3,5 *) | Teile Katalysator (Dimethylcyclohexylamin) |
| 2,0 Teile | Siliconstabilisator |
| | ® DC 193, ein Siliconglykol-Copolymer der DOW Corning GmbH, |
| | Wiesbaden, mit einer Dichte von 1,07 g/ml |
| 2,3 | Teile Wasser |
| 9 - 13 **) | Teile n-Pentan mit einem Siedepunkt von 36 °C und einer Dichte von 0,63 g/ml |
| variable | Teile Polyisocyanat (NCO-Index 110) |
| | ® Desmodur 44V20, ein Diphenylmethan-4,4'-diisocyanat der BAYER AG, Leverkusen, mit einer Viskosität von ca. 200 mPas und einer Dichte von 1,235 g/ml bei 20 °C. |

| | |
|---|---|
| *) Die Katalysatormenge wurde auf die Aktivierungseigenschaften des stickstoffhaltigen Polyols abgestimmt. | |
| **) Die Treibmittelmenge wurde so gewählt, daß das Raumgewicht des Schaums bei 35 ± 3 g/l, lag. | |

Bei den nachfolgenden Beispielen wurden folgende Polyetherpolyole eingesetzt:
® Desmophen 4030 M, ein stickstofffreies hochfunktionelles Polyetherpolyol auf Basis Saccharose der BAYER AG, Leverkusen, mit einer Hydroxylzahl von 380 mg KOH/g und einer Dichte von ca. 1,11 g/ml bei 25 °C.
® Desmophen 4051 B, ein tetrafunktionelles Polyetherpolyol auf Aminbasis der BAYER AG, Leverkusen, mit einer Hydroxylzahl von 470 mg KOH/g und einer Dichte von ca. 1,02 g/ml.
   Der analytisch ermittelte Stickstoffgehalt lag bei 6,1 %.
® Voranol RN 411, ein stickstofffreies Polyetherpolyol auf Basis Sucrose der DOW Benelux N.V., Terneuzen, NL mit einer Hydroxylzahl von 410 mg KOH/g und einer Dichte von 1,10 g/ml bei 25 °C
® Voranol RA 640, ein Polyetherpolyol auf Aminbasis der DOW Benelux N.V., Terneuzen, NL mit einer Hydroxylzahl von 640 mg KOH/g und einer Dichte von 1,03 g/ml bei 25 °C.
   Der analytisch ermittelte Stickstoffgehalt lag bei 8,1 %.

Bei den nachfolgenden Beispielen wurde folgendes Flammschutzmittel eingesetzt:
® Hostaflam AP 422, ein langkettiges, wenig wasserlösliches Ammoniumpolyphosphat der Hoechst AG, Frankfurt, mit einer Dichte von 1,9 g/ml, einem Phosphorgehalt von 31,5 Gew.-% und einem Stickstoffgehalt von 14,5 Gew.-%.

Zur Beurteilung der Flammwidrigkeit wurden Brandtests nach DIN 4102, Teil 1, mit jeweils 5 Proben in den Abmessungen 90 x 190 mm (Kantenbeflammung) durchgeführt.

Für Polyurethan-Hartschäume, die in Deutschland als Baustoffe (Dämmstoffe) eingesetzt werden sollen, ist die Einstufung in die Klasse DIN 4102-B2 verbindlich vorgeschrieben.

Die Versuche zeigen, daß trotz des Einsatzes von 40 php Ammoniumpolyphosphat weder beim stickstofffreien Polyol (Beispiele 1 und 6) noch beim stickstoffhaltigen Polyol (Beispiele 5 und 10) ein Flammschutzeffekt beobachtet wird.

Erst bei Polyolmischungen mit dem optimalen Stickstoffgehalt (Beispiele 3 und 8) lassen sich Einstufungen in die Klasse DIN 4102-B2 erreichen.

Noch stärker ausgeprägt ist der gleiche Trend bei Verwendung einer thixotrop eingestellten Flammschutzmittelpaste auf Basis von Ammoniumpolyphosphat/Triethylphosphat (siehe Tabelle 2).

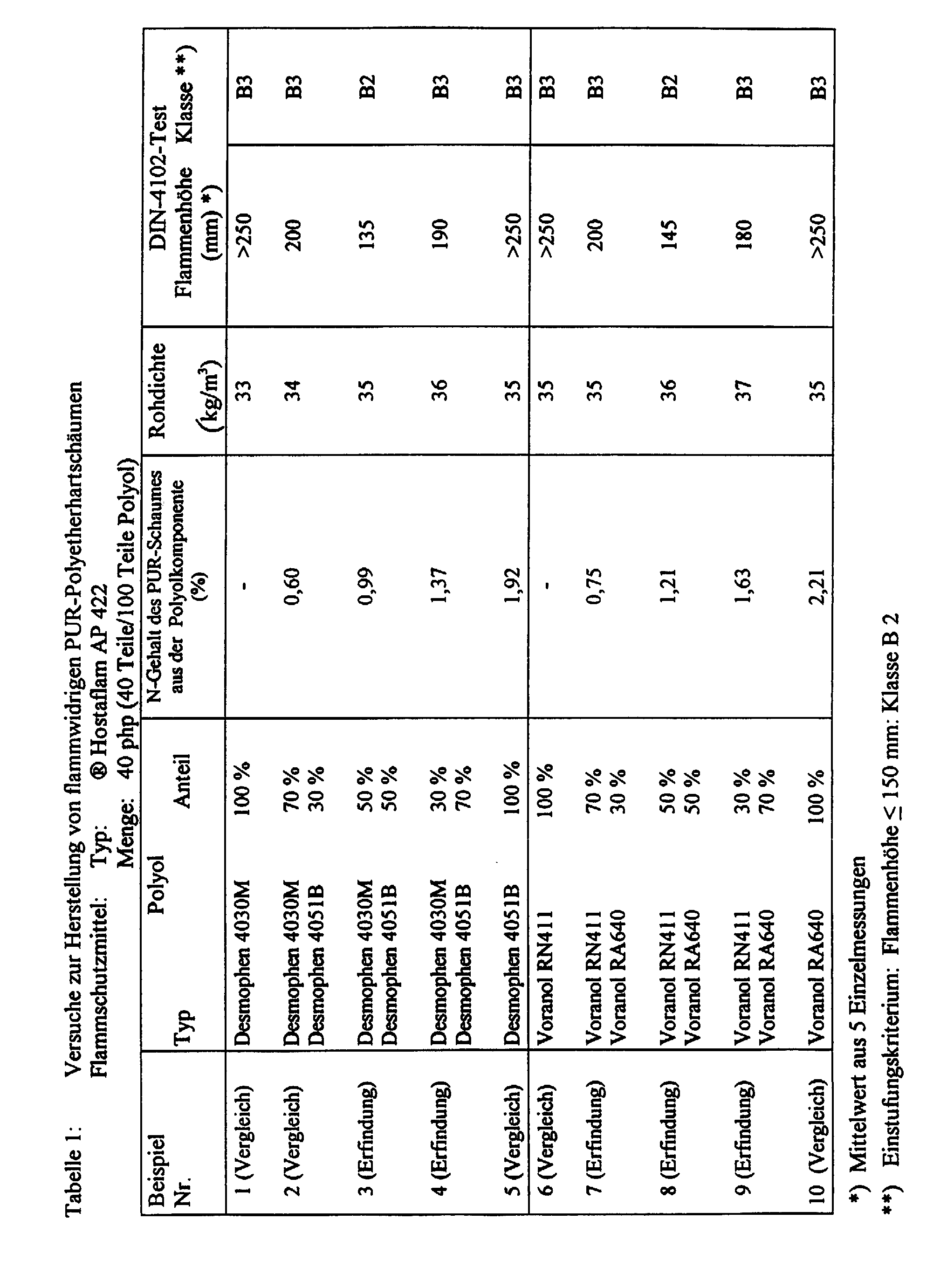

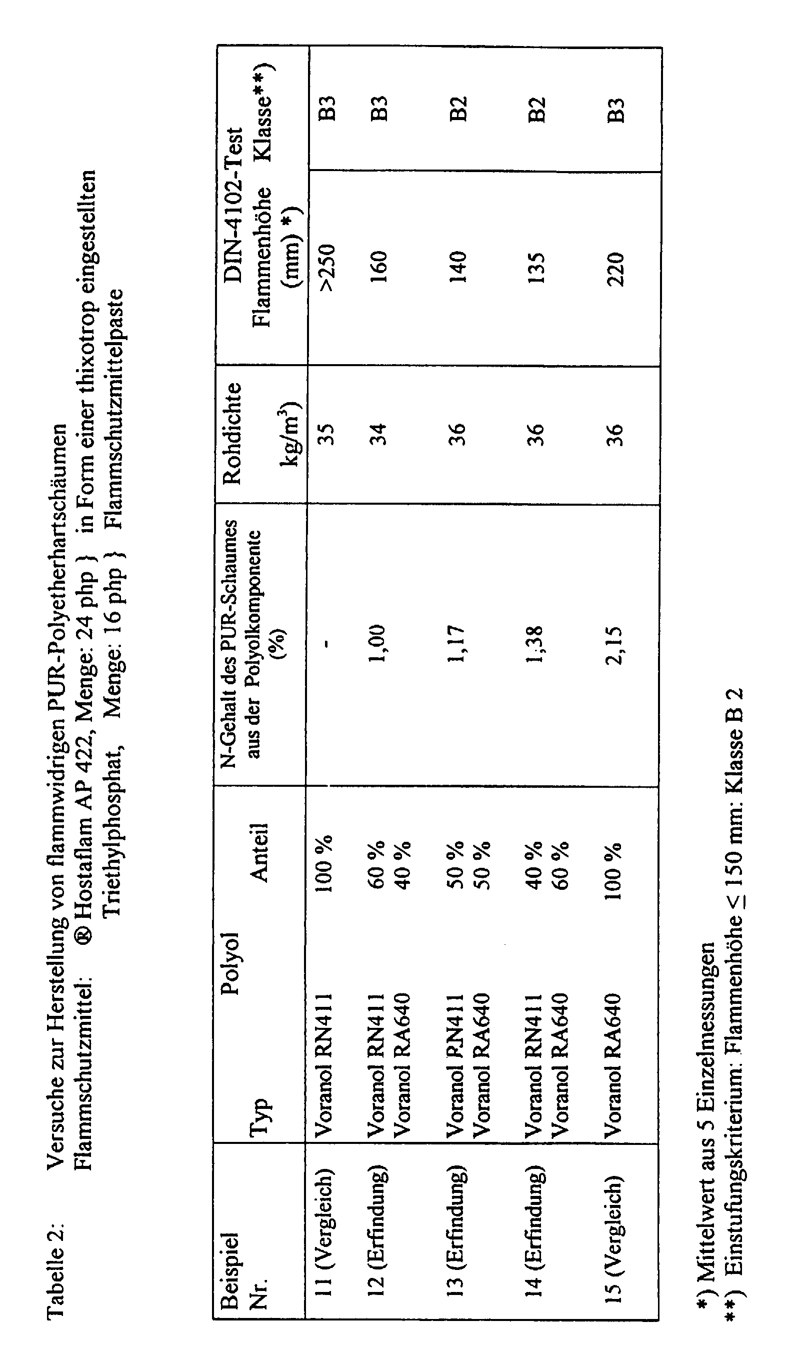

## Patentansprüche

1. Halogenfreier, flammwidriger Polyurethanhartschaum auf Basis von Polyetherpolyoien und Polyisocyanaten, dadurch gekennzeichnet, daß er als Polyolkomponente Mischungen von stickstofffreien und stickstoffhaltigen Polyetherpolyolen und als Flammschutzmittel Ammoniumpolyphosphat enthält.

2. Polyurethanhartschaum nach Anspruch 1, dadurch gekennzeichnet, daß sein Stickstoffgehalt aus der Polyolkomponente zwischen 0,7 und 1,7 Gew.-% liegt.

3. Polyurethanhartschaum nach einem der Ansprüche 1 oder 2, dadurch gekennzeichnet, daß er 20 bis 70 Gewichtsteile, vorzugsweise 20 bis 50 Gewichtsteile des Flammschutzmittels je 100 Gewichtsteile Polyetherpolyol enthält.

4. Verfahren zur Herstellung eines halogenfreien, flammwidrigen Polyurethanhartschaums auf der Basis von Mischungen aus stickstoffhaltigen und stickstofffreien Polyetherpolyolen und Polyisocyanaten, dadurch gekennzeichnet, daß das Flammschutzmittel in Form einer Paste aufBasis von Ammoniumpolyphosphat und einem niedrigviskosen Phosphorsäuretriester zugesetzt wird.

5. Verfahren nach Anspruch 4, dadurch gekennzeichnet, daß die Paste mit hochdisperser Kieselsäure, modifizierten Rizinusölderivaten, organisch modifizierten Schichtsilikaten oder deren Mischungen thixotrop eingestellt wurde.

## Claims

1. A halogen-free, flame retardant rigid polyurethane foam based on polyether-polyols and polyisocyanates, which comprises, as the polyol component, mixtures of nitrogen-free and nitrogen-containing polyether-polyols and, as the flameproofing agent, ammonium polyphosphate.

2. A rigid polyurethane foam as claimed in claim 1, wherein its nitrogen content from the polyol component is between 0.7 and 1.7 % by weight.

3. A rigid polyurethane foam as claimed in one of claims 1 or 2, which comprises 20 to 70 parts by weight, preferably 20 to 50 parts by weight, of the flameproofing agent per 100 parts by weight of polyether-polyol.

4. A process for the production of a halogen-free, flame retardant rigid polyurethane foam based on mixtures of nitrogen-containing and nitrogen-free polyether-polyols and polyisocyanates, which comprises adding the flameproofing agent in the form of a paste based on ammonium polyphosphate and a low-viscosity phosphoric acid triester.

5. The process as claimed in claim 4, wherein the paste has been formulated thixotropically with highly disperse silicic acid, modified castor oil derivatives, organically modified laminar silicates or mixtures thereof.

## Revendications

1. Mousse rigide de polyuréthane exempte d'halogène, ininflammable, à base de polyétherpolyols et de polyisocyanates, caractérisée en ce qu'elle contient comme constituant polyol des mélanges de polyétherpolyols exempts d'azote et contenant de l'azote et comme agent ignifuge du polyphosphate d'ammonium.

2. Mousse rigide de polyuréthane selon la revendication 1, caractérisée en ce que sa teneur en azote provenant du constituant polyol est comprise entre 0,7 et 1,7% en poids.

3. Mousse rigide de polyuréthane selon l'une des revendications 1 ou 2, caractérisée en ce qu'elle contient de 20 à 70 parties en poids, de préférence de 20 à 50 parties en poids de l'agent ignifuge pour 100 parties en poids de polyétherpolyol.

4. Procédé pour la préparation d'une mousse rigide de polyuréthane exempte d'halogène, ininflammable à base de mélanges constitués de polyétherpolyols contenant de l'azote et exempts d'azote et de polyisocyanates, caractérisé en ce que l'on ajoute l'agent ignifuge dans la forme d'une pâte à base de polyphosphate d'ammonium et d'un triester d'acide phosphorique de faible viscosité.

5. Procédé selon la revendication 4, caractérisé en ce que l'on a ajusté de manière thixotrope la pâte avec de l'acide silicique hautement dispersé, des dérivés modifiés d'huile de ricin, des silicates en couches organiquement modifiés ou des mélanges de ceux-ci.
